# FASCICULE DE BREVET EUROPEEN

(11) **EP 4 476 007 B1**
(45) Date de publication et mention de la délivrance du brevet: **12.08.2026**
(21) Numéro de dépôt: 22711302.4
(22) Date de dépôt: 11.02.2022
(51) Int. Cl.: B21C 43/02, B21B 45/04, B21C 43/04, B23K 26/36, B21C 9/00

(54) **INSTALLATION ET PROCÉDÉ DE TRAITEMENT DE LA SURFACE D'UN PRODUIT LONG EN VUE DE SON TRÉFILAGE**
ANLAGE UND VERFAHREN ZUR OBERFLÄCHENBEHANDLUNG EINES LÄNGLICHEN PRODUKTS ZUM ZWECK DES DRAHTZIEHENS
FACILITY AND METHOD FOR TREATING THE SURFACE OF AN ELONGATE PRODUCT FOR THE PURPOSE OF WIRE-DRAWING

(43) Date de publication de la demande: 18.12.2024
(73) Titulaire: Aperam, 1882 Luxembourg (LU)
(72) Inventeur: GUILLOTTE, Ismaël, Romaric, Alexis, 62131 Verquin (FR); LATOUCHE, Baptiste, Pierre, Jean, 59800 Lille (FR)
(74) Mandataire: Lavoix
(86) Numéro de dépôt international: PCT/IB2022/051241
(87) Numéro de publication internationale: WO 2023/152548

(56) Documents cités:
- EP-A1- 3 544 760
- CN-U- 210 647 767
- KR-B1- 101 735 006
- US-A- 4 087 898
- US-A1- 2021 023 657

## Description

La présente invention concerne une installation et un procédé de traitement de la surface d'un produit long en vue de son tréfilage, après que celui-ci a subi des expositions à une atmosphère oxydante pour certains de ses éléments chimiques, par exemple lors d'un séjour dans un four de traitement thermique.

Dans la suite du texte, on prendra comme exemple privilégié d'application de l'invention le domaine des fils et rubans d'acier inoxydable de toutes catégories (austénitiques, ferritiques, austéno-ferritiques...). Mais il doit être entendu que cela ne sera pas limitatif, et que l'invention pourra s'appliquer à d'autres métaux pour lesquels se posent des problèmes techniques analogues à ceux rencontrés sur les fils et rubans d'acier inoxydable, notamment aux diverses classes d'aciers au carbone, et alliages spéciaux, notamment ferreux.

De tels produits longs sont généralement produits par une suite de traitements comprenant le réchauffage d'un demi-produit (notamment une billette), un laminage à chaud pour produire le produit long, le bobinage du produit long sous forme d'une couronne qui est alors soumise à un recuit, dans un four sous atmosphère réductrice ou dans un four à gaz sous atmosphère oxydante.

Le produit long ainsi obtenu est destiné à être soumis à un traitement de tréfilage à l'aide d'une filière de tréfilage dans le but d'améliorer la précision des dimensions et les propriétés mécaniques du produit long.

La suite de traitements mise en œuvre avant le tréfilage, en particulier le laminage à chaud et le recuit s'il n'est pas réalisé sous une atmosphère entièrement réductrice ou inerte, conduit à la formation d'une couche d'oxyde à la surface du produit long. Ces oxydes ont une composition qui varie sensiblement selon la composition du métal de base et les conditions de leur formation. Le plus habituellement, les oxydes des éléments Fe, Cr, Mn et Si dans le cas des aciers inoxydables, mais également des éléments Ni, Nb, Cu si la nuance contient ces éléments, y sont prépondérants.

Ces oxydes indésirables doivent être éliminés avant la mise en œuvre du tréfilage, notamment pour éviter qu'ils ne s'incrustent dans la surface du produit long pendant le tréfilage et ne conduisent à un état de surface médiocre.

Il doit être entendu que la couche d'oxydes indésirables dont on parle ici n'est pas la fine couche à base d'oxydes de Cr (dite « couche passive ») qui se forme spontanément à l'air et à température ambiante à la surface des aciers inoxydables, et qui les protège de l'oxydation. La couche d'oxydes qui pose problème, et que l'on veut éliminer, est celle qui se forme pendant des séjours du produit à haute température en atmosphère oxydante. Une fois cette couche enlevée, la surface de l'acier inoxydable est mise à nu et la couche passive protectrice d'oxydes de Cr peut se former à nouveau, de façon rapide et spontanée, rendant l'acier de nouveau inoxydable dans des conditions d'utilisation habituelles.

Par ailleurs, les produits longs nécessitent, avant la mise en œuvre du tréfilage, une étape de préparation de surface destinée à ajuster leur rugosité de surface. L'ajustement de la rugosité permet d'assurer une bonne adhérence des savons déposés à la surface du produit long juste avant son tréfilage, donc de faciliter la mise en œuvre du tréfilage.

Classiquement, la couche d'oxydes indésirable est enlevée au moyen d'un procédé de décapage chimique ou électrolytique, ou d'une succession de tels décapages.

Le décapage chimique est réalisé dans un ou plusieurs bains d'acide fluorhydrique, chlorhydrique, sulfurique ou nitrique. Le décapage électrolytique est réalisé typiquement dans un bain de sulfate de sodium ou un bain acide (nitrique ou sulfurique).

Le décapage chimique est le procédé le plus radical pour éliminer les oxydes indésirables. Ce décapage est mis en œuvre sur le produit long sous forme de couronnes, ou en défilement. Le décapage chimique est également utilisé pour modifier la rugosité de surface du produit long pour en augmenter l'aptitude au tréfilage.

Mais il présente de nombreux inconvénients.

Notamment, le décapage chimique consomme des quantités élevées d'acides, avec, au plus, de très faibles possibilités d'en récupérer une partie pour les réutiliser ultérieurement.

Les infrastructures nécessaires à son exécution, à savoir les bains de décapage successifs et leurs annexes, sont coûteuses et encombrantes.

Ces installations utilisent des produits dangereux, en particulier l'acide fluorhydrique. Leurs rejets polluants liquides et solides (boues renfermant les oxydes mélangés aux liquides de décapage) doivent être stockés et retraités selon une règlementation stricte dont la sévérité ne pourra que s'accroître dans l'avenir, ce qui est coûteux. Les bains d'acide, chauffés, dégagent également des vapeurs acides qu'il faut neutraliser. L'acide nitrique est aussi une source de dégagements de NOₓ qu'il faut capter et traiter.

La présence de chrome hexavalent en solution dans les liquides de décapage représente également un risque fort pour la santé du personnel et pour l'environnement : ses teneurs dans les liquides et l'exposition du personnel sont mesurées et suivies.

Par ailleurs, les temps de décapage peuvent être très longs, de l'ordre de plusieurs dizaines de minutes pour des nuances d'acier à haute résistance à la corrosion.

Le décapage des produits longs sous forme de couronne permet de réduire l'encombrement des installations de décapage, mais il peut conduire à un décapage non uniforme du produit. En effet, le recouvrement des spires et les liens maintenant la couronne peuvent empêcher les produits de décapage d'atteindre certaines régions du produit, et les spires les plus centrales sont moins bien exposées aux produits de décapage que les spires externes.

On a donc examiné des possibilités de remplacer, au moins dans certains cas, le décapage chimique ou électrolytique des produits longs par des procédés faisant usage d'un laser.

On connait du document EP 3 544 760 A1, formant la base du préambule de la revendication 1, une installation de décapage laser.

On connait par ailleurs du document US 4 087 898 A, formant la base du préambule de la revendication 13, un produit long dont la rugosité est contrôlée.

On connait notamment des documents CN 210816759 U, CN 210647767 U, CN 108405652 A et KR 101735006 B1 des installations de décapage de fils métalliques en défilement, au moyen d'une pluralité de lasers répartis autour du fil métallique. Les lasers sont en particulier disposés régulièrement sur la circonférence d'un cercle dont le centre est occupé par le fil à traiter.

Cette solution ne donne pas entière satisfaction. En effet, cette solution ne permet pas, à elle seule, d'assurer un décapage complet de la couche d'oxydes. En outre, le remplacement du décapage chimique par un traitement laser ne permet pas de régler la problématique de la rugosité du fil, et la solution de décapage proposée par ces documents fournit un fil dont la rugosité n'est pas forcément adaptée au tréfilage. La rugosité pourrait être ensuite ajustée par un décapage chimique, mais dans un tel cas les problématiques liées au décapage chimique, telles que mentionnées ci-dessus, ne seraient pas résolues.

Un but de l'invention est donc de proposer une installation et procédé de traitement d'un produit long métallique qui fournisse un produit long apte au tréfilage sans opération supplémentaire, et qui permette de s'affranchir des inconvénients du décapage chimique rappelés ci-dessus.

A cet effet, l'invention a pour objet une installation de traitement d'un produit long métallique en défilement en vue d'une étape de tréfilage, le produit long présentant au moins une surface recouverte d'une couche d'oxydes, caractérisée en ce qu'elle comprend :
- un ensemble de décapage comprenant au moins un groupe d'une pluralité de lasers répartis autour du produit long en défilement, chaque laser étant configuré pour émettre des faisceaux sur la surface du produit long en défilement pour la décaper, chaque laser étant destiné au traitement d'une portion associée de la surface du produit long,
- une unité de pilotage propre à acquérir des informations relatives au produit long en défilement, les informations comprenant une vitesse de défilement du produit long et au moins une dimension caractéristique du produit long dans un plan orthogonal à un axe de défilement du produit long,
l'unité de pilotage étant configurée pour :
- déterminer des paramètres de fonctionnement à imposer à l'ensemble de décapage pour obtenir le décapage de la couche d'oxyde à la surface du produit long et pour ablater une couche de métal d'épaisseur prédéterminée à la surface du produit long, et de telle sorte à obtenir à la surface du produit long des motifs de rugosité périodiques, la largeur des motifs périodiques étant comprise entre 5 µm et 1 mm, par comparaison avec des résultats expérimentaux préenregistrés dans l'unité de pilotage, et
- imposer lesdits paramètres de fonctionnement audit ensemble de décapage.

Selon un mode de réalisation, les lasers du ou de chaque groupe de lasers sont répartis uniformément autour du produit long en défilement.

Selon un mode de réalisation, les paramètres de fonctionnement incluent une puissance d'émission des lasers du ou de chaque groupe et/ou une durée d'interaction laser/matière en chaque point de la surface du produit long.

De préférence, l'ensemble de décapage comprend un système de répartition configuré pour mettre en forme les faisceaux laser ou pour déplacer les faisceaux laser sur la surface du produit long de telle sorte que les faisceaux laser émis par la pluralité de lasers du ou de chaque groupe couvrent l'ensemble de la surface du produit long lors de son défilement.

Selon un mode de réalisation, le système de répartition comprend, pour chaque laser d'au moins un groupe, un dispositif optique configuré pour transformer chaque faisceau émis par le laser associé en une bande impactant une portion de la surface du produit long.

En variante, le système de répartition comprend, pour chaque laser d'au moins un groupe, un dispositif de balayage configuré pour déplacer les faisceaux générés par le laser associé sur la surface du produit long, selon une vitesse de balayage et un pas de balayage déterminés, de telle sorte que les faisceaux émis par chaque laser impactent une portion de surface du produit long.

De préférence, les paramètres de fonctionnement comprennent la vitesse de balayage et le pas de balayage du dispositif de balayage.

Selon un mode de réalisation, la portion de surface du produit long est délimitée par deux droites de la surface du produit long parallèles à l'axe de défilement.

De préférence, l'ensemble de décapage comprend un premier groupe d'une pluralité de premiers lasers répartis autour du produit long en défilement et un deuxième groupe d'une pluralité de deuxièmes lasers répartis autour du produit long en défilement, chaque deuxième laser étant en aval de chaque premier laser du premier groupe par rapport à l'axe de défilement.

Généralement, les premiers lasers sont configurés pour décaper la couche d'oxyde à la surface du produit long et ablater une couche de métal d'épaisseur prédéterminée à la surface du produit long, et les deuxièmes lasers sont configurés pour conférer à la surface du produit long la rugosité prédéterminée.

De préférence, les premiers lasers sont des lasers à émission continue, et les deuxièmes lasers sont des lasers à émission continue ou des lasers configurés pour émettre des faisceaux pulsés, notamment des lasers nanoseconde.

L'invention a également pour objet un procédé de traitement, par une installation de traitement selon l'invention, d'un produit long métallique en défilement en vue d'une étape de tréfilage, le produit long présentant au moins une surface recouverte d'une couche d'oxydes, comprenant les étapes suivantes :
- acquisition par l'unité de pilotage d'informations relatives au produit long en défilement, les informations comprenant une vitesse de défilement du produit long et au moins une dimension caractéristique du produit long dans un plan transverse à un axe de défilement du produit long,
- détermination par l'unité de pilotage, en fonction des informations relatives au produit long en défilement, de paramètres de fonctionnement à imposer à l'ensemble de décapage pour obtenir le décapage de la couche d'oxyde à la surface du produit long et pour ablater une couche de métal d'épaisseur prédéterminée à la surface du produit long, et de telle sorte à obtenir à la surface du produit long des motifs de rugosité périodiques, la largeur des motifs périodiques étant comprise entre 5 µm et 1 mm, par comparaison avec des résultats expérimentaux préenregistrés dans l'unité de pilotage,
- commande par l'unité de pilotage de l'ensemble de décapage pour imposer lesdits paramètres de fonctionnement à l'ensemble de décapage,
- émission par l'ensemble de décapage, au moyen des lasers, de faisceaux laser sur la surface du produit long en défilement selon les paramètres de fonctionnement déterminées par l'unité de pilotage.

Selon un mode de réalisation, lors de l'étape d'émission, les faisceaux laser sont émis par des lasers répartis uniformément autour du produit long en défilement.

De préférence, lors de l'étape d'émission, les faisceaux laser sont mis en forme ou déplacés sur la surface du produit long par un système de répartition de l'ensemble de décapage, commandé par l'unité de pilotage, de telle sorte que les faisceaux laser émis par la pluralité de lasers du ou de chaque groupe couvrent l'ensemble de la surface du produit long lors de son défilement.

Selon un mode de réalisation, le système de répartition comprenant, pour chaque laser d'au moins un groupe, un dispositif optique, le dispositif optique transforme chaque faisceau émis par le laser associé en une bande impactant une portion de la surface du produit long.

En variante, le système de répartition comprenant, pour chaque laser d'au moins un groupe, un dispositif de balayage, ce dispositif de balayage déplace les faisceaux générés par le laser associé sur la surface du produit long, selon une vitesse de balayage et un pas de balayage déterminés et commandés par l'unité de pilotage, de telle sorte que les faisceaux émis par chaque laser impactent une portion de surface du produit long.

Par exemple, le dispositif de balayage déplace les faisceaux dans une première direction formant un angle compris entre 0° et 90°, par exemple 45°, avec l'axe de défilement et dans une deuxième direction orthogonale à la première direction. Les deux directions sont par exemple respectivement orthogonale et parallèle à l'axe de défilement, ou forment chacune un angle non nul avec l'axe de défilement.

Selon un mode de réalisation, la portion de surface du produit long est délimitée par deux droites de la surface du produit long parallèles l'une à l'autre, notamment parallèles à l'axe de défilement.

De préférence, l'ensemble de décapage comprenant un premier groupe d'une pluralité de premiers lasers répartis autour du produit long en défilement et un deuxième groupe d'une pluralité de deuxièmes lasers répartis autour du produit long en défilement, chaque deuxième laser étant en aval de chaque premier laser du premier groupe par rapport à l'axe de défilement, l'étape d'émission comprend l'émission de faisceaux lasers par les lasers du premier groupe et les lasers du deuxième groupe sur la surface du produit long en défilement.

Généralement, les premiers lasers décapent la couche d'oxyde à la surface du produit long et ablatent une couche de métal d'épaisseur prédéterminée à la surface du produit long, puis les deuxièmes lasers confèrent à la surface du produit long la rugosité prédéterminée.

L'invention a également pour objet un produit long métallique destiné à être tréfilé, le produit long présentant à sa surface des motifs de rugosité périodiques, la largeur des motifs périodiques étant comprise entre 5 µm et 200 µm.

Selon un mode de réalisation, les motifs périodiques consistent en des stries périodiques, comprenant une alternance régulière de lignes en saillie et de sillons, ou en des motifs comprenant une alternance régulière de pics et de creux selon une première et une deuxième directions distinctes.

Généralement, la hauteur moyenne entre les crêtes et les sillons, ou la hauteur moyenne entre les pics et les creux, est comprise entre 0,2 µm et 500 µm.

Le produit long est notamment un fil ou un ruban.

Le produit long est apte à être tréfilé sans subir de traitement de préparation de surface par décapage chimique ou mécanique.

L'invention sera mieux comprise à la lecture de la description qui suit, donnée en référence aux figures annexées, parmi lesquelles :
- La Figure 1 illustre schématiquement, de profil, une installation de décapage laser selon un mode de réalisation de l'invention ;
- La Figure 2 illustre un exemple de disposition de lasers autour d'un produit en défilement, selon un mode de réalisation.

Les installations de traitement qui vont être décrites en détail et illustrées par des exemples le seront essentiellement en référence au traitement d'un fil d'acier inoxydable en défilement, venant de subir un recuit sous forme de couronne.

L'installation de traitement selon l'invention qui sera décrite peut aussi être intégrée à une ligne de traitement continue comportant plus ou moins d'appareillages que ce qui va être décrit, ou faire l'objet d'une installation séparée spécialement dédiée à ce traitement.

Egalement, on n'a pas représenté les appareillages habituellement présents sur de telles lignes qui n'ont pas de rôle métallurgique majeur et, en tout cas, n'interviennent pas en tant que tels dans la conduite du traitement réalisé selon l'invention. On peut notamment citer des dresseries et guides-fils pour la mise en défilement du produit long, et des accumulateurs qui servent de « tampons » entre certains des appareillages qui peuvent nécessiter chacun une vitesse de défilement du produit différente.

La ligne continue représentée comporte d'abord une installation de débobinage 1 d'une couronne 2 d'un produit long 3 d'acier inoxydable laminé à chaud.

Le produit long 3 est par exemple un ruban ou un fil.

Un ruban a par exemple une largeur comprise entre 1 et 8 mm et une épaisseur comprise entre 0,1 et 3 mm.

Un fil a par exemple un diamètre compris entre 1 et 14 mm.

Le produit long 3, notamment fil ou ruban, a par exemple une masse comprise entre 10 kg et 1000 kg.

Le produit long 3 comporte à sa surface une couche d'oxydes d'épaisseur généralement comprise entre 0,2 et 30 µm.

Le produit long 3 est mis en défilement à une vitesse allant typiquement jusqu'à 15 m/s.

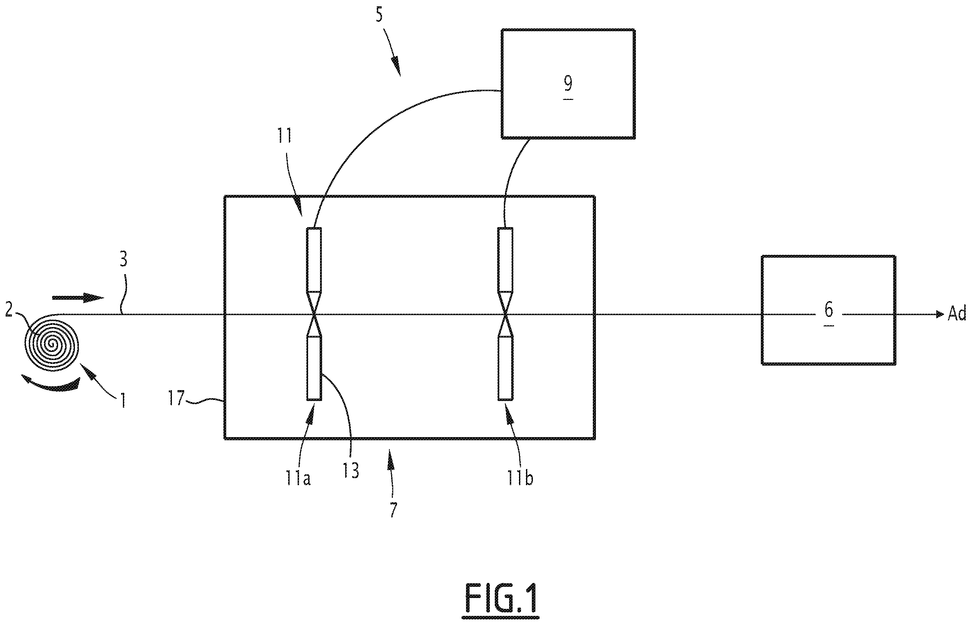

Selon le mode de réalisation de la Figure 1, l'installation 5 de traitement est disposée sur la ligne en aval de l'installation de débobinage 1, et en amont d'une installation 6 de tréfilage. Dans ce mode de réalisation, l'installation de débobinage 1, l'installation 5 de traitement et l'installation 6 de tréfilage sont disposés sur une ligne continue.

L'installation 5 de traitement comporte un ensemble 7 de décapage et une unité 9 de pilotage.

L'ensemble 7 de décapage est destiné à traiter la surface du produit long 3 afin de décaper la couche d'oxyde à la surface du produit long 3, d'ablater une couche de métal d'épaisseur prédéterminée à la surface du produit long 3, et de sorte à obtenir une rugosité prédéterminée à la surface du produit long 3. L'ensemble 7 de décapage est en particulier configuré pour traiter la surface du produit long 3 de manière homogène, de telle sorte que l'état de surface du produit long 3 soit homogène sur l'ensemble de la surface.

L'ensemble 7 de décapage est destiné à décaper la couche d'oxyde par ablation, sublimation ou vaporisation des oxydes.

La couche de métal destinée à être ablatée est située en-dessous de la couche d'oxyde. L'ablation d'une couche de métal d'épaisseur prédéterminée à la surface du produit long 3 permet d'obtenir une surface de meilleure qualité à l'issue du traitement. En effet, le métal sous la couche d'oxyde contient généralement des défauts de surface, des oxydes internes, des inclusions et/ou des zones de composition chimique différente de celle du cœur du métal, qu'il est souhaitable de supprimer.

L'épaisseur de la couche de métal à ablater est typiquement comprise entre 5 µm et 50 µm. Par exemple, pour un produit long réalisé en un alliage de nickel 625, cette épaisseur est comprise entre 10 µm et 15 µm.

L'obtention d'une rugosité prédéterminée à la surface du produit long 3 permet d'optimiser l'accroche des savons utilisés pour le tréfilage, et ainsi d'obtenir des performances de tréfilabilité améliorées.

La rugosité souhaitée dépend de la composition du métal, de ses dimensions et des performances de tréfilage recherchées.

La rugosité est évaluée par mesure en sens travers du produit long au moyen d'un palpeur de contact, selon la norme NF EN ISO 4287 :1998.

Par exemple, pour les nuances à faible rugosité (notamment de type 625), la rugosité Ra avec une fréquence de coupure λc=0,8 mm (ou Ra_{0,8}) est inférieure à 1,4 µm.

Pour les nuances à topographie ou relief plus marqué (notamment la nuance 286), la rugosité Ra avec une fréquence de coupure λc=2,5 mm (ou Ra_{2,5}) est inférieure à 6 µm, et généralement supérieure à 1,4 µm.

L'ensemble 7 de décapage comprend au moins un groupe 11 d'une pluralité de lasers 13 destinés à être répartis autour du produit long 3 lors de son défilement. Les lasers sont par exemple centrés autour d'un axe, appelé ci-après axe de défilement A_{d}, destiné à correspondre à un axe central du produit long lors de son défilement.

Chaque laser 13 est destiné à traiter une portion de surface du produit long 3. Notamment, chaque portion ainsi attribuée à un laser 13 donné est délimitée par deux droites de la surface du produit long parallèles à la direction de défilement.

Chaque portion s'étend généralement sur toute la longueur du produit long 3.

Notamment, lorsque le produit long 3 est un ruban, la portion attribuée à chaque laser 13 est une bande de largeur prédéterminée de la surface du produit (la largeur étant alors égales à la distance entre les deux droites délimitant la portion).

Lorsque le produit long 3 est un fil, la portion attribuée à chaque laser 13 est une portion de la surface du fil 3 délimitée par deux droites parallèles à la direction de défilement, ces deux droites formant avec l'axe de défilement A_{d} un angle donné noté βi.

L'ensemble des portions attribuées aux lasers 13 d'un même groupe 11 couvre l'ensemble de la surface du produit. Ainsi, dans le cas d'un fil, la somme des angles βi est supérieure ou égale à 360°.

De préférence, la somme des aires des portions attribuées aux lasers 13 d'un même groupe 11 est supérieure à l'aire de la surface du produit long. Dans ce cas, chaque portion attribuée à un laser 13 recouvre partiellement la portion attribuée à deux autres lasers 13. Ceci permet d'éviter ou de minimiser les différences d'état de surface qui pourraient exister entre la zone centrale d'une portion et les zones situées à sa périphérie, susceptibles de recevoir une puissance laser inférieure à celle reçue par la zone centrale d'une portion. Le recouvrement d'une portion par une autre permet en effet aux zones de recouvrement des deux portions concernées, localisées chacune à la périphérie de la portion respective, d'être traitées par deux lasers 13.

De préférence, les portions attribuées aux lasers 13 sont de dimensions égales. Par exemple, lorsque le produit long 3 est un fil, les angles βᵢ associés aux lasers du groupe 11 sont égaux les uns aux autres. Par exemple, les lasers 13 du groupe 11 étant répartis régulièrement autour du fil 3, les angles βᵢ associés aux lasers 13 du groupe 11 sont égaux les uns aux autres.

Dans l'exemple illustré, l'ensemble 7 de décapage comprend deux groupes : un premier groupe 11a d'une pluralité de premiers lasers 13 répartis autour du produit long 3 en défilement, et un deuxième groupe 11b d'une pluralité de deuxièmes lasers également répartis autour du produit long 3 en défilement.

Les deuxièmes lasers du deuxième groupe 11b sont en aval des premiers lasers du premier groupe 11a par rapport à la direction de défilement. En particulier, chaque deuxième laser est disposé en aval de tous les premiers lasers par rapport à la direction de défilement.

Chaque groupe 11 de lasers est destiné à traiter la surface du produit long.

Selon un mode de réalisation, chaque groupe 11 de lasers est destiné à traiter l'ensemble de la surface du produit long. Dans ce mode de réalisation, l'ensemble de la surface du produit long est destiné à être traité successivement par les lasers du premier groupe 11a, puis par les lasers du deuxième groupe 11b, et le cas échéant, par les lasers de chaque groupe additionnel.

En variante, au moins un groupe 11 de lasers est destiné à traiter une partie seulement de la surface du produit long. Dans cette variante, les groupes 11 de lasers, pris ensemble, sont destinés à traiter l'ensemble de la surface du produit long.

Le ou chaque groupe 11, 11a, 11b de lasers comprend au moins trois lasers 13. Selon un mode de réalisation, les groupes de lasers comprennent un nombre identique de lasers. En variante, le nombre de lasers 13 varie d'un groupe à l'autre.

Chaque laser 13 est destiné à émettre des faisceaux laser selon une direction principale d'émission notée D₁,...Dᵢ...Dₙ, où n est le nombre de lasers 13 d'un groupe 11, 11a, 11b.

Si le produit long 3 est un fil, les directions principales d'émission D₁,...Dᵢ...Dₙ sont toutes orientées vers le centre du fil, i.e. l'axe de défilement A_{d}.

De préférence, au sein de chaque groupe 11, 11a, 11b, les lasers 13 sont équidistants de l'axe de défilement A_{d} du fil 3.

Par exemple, le ou chaque groupe 11, 11a, 11b de lasers est constitué de lasers 13 répartis à la circonférence d'un même cercle dont le centre appartient à l'axe de défilement A_{d}. Les directions principales d'émission D₁,...Dᵢ...Dₙ sont alors concourantes et se croisent sur l'axe de défilement A_{d}.

En variante, les lasers 13 d'un même groupe 11, 11a, 11b ne sont pas répartis à la circonférence d'un cercle, mais à la circonférence d'au moins deux cercles centrés sur l'axe de défilement A_{d} ou à la circonférence d'une hélice circulaire, dont l'axe d'hélice est l'axe de défilement A_{d}.

De préférence, les aires des portions de surface destinées à être traitées par les différents lasers 13 d'un groupe 11, 11a, 11b sont identiques.

Selon un mode de réalisation, les aires des portions de surface destinées à être traitées par chaque laser 13 d'un groupe sont égales d'un groupe à l'autre. En variante, les aires des portions de surface destinées à être traitées par chaque laser 13 d'un groupe varient d'un groupe à l'autre.

Les lasers 13 sont de préférence répartis régulièrement autour du produit long.

Par exemple, les lasers sont répartis de telle sorte que la direction principale d'émission de chaque laser du groupe 11, 11a, 11b forme un angle non nul, appelé angle d'écartement α, avec les directions principales d'émission de deux autres lasers du groupe 11, 11a, 11b, cet angle α étant le même quel que soit le laser considéré au sein d'un groupe 11.

Dans ce cas, et dans le cas d'un fil, l'angle α est inférieure ou égal à l'angle β formé par les deux droites délimitant la portion attribuée à chaque laser 13 avec l'axe de défilement A_{d}. Lorsque l'angle α est inférieur à l'angle β, les portions se recouvrent partiellement les unes les autres.

Notamment, si le nombre de lasers du groupe 11, 11a, 11b est égal à trois, cet angle α est égal à 120°. Si le nombre de lasers du groupe 11, 11a, 11b est égal à six, cet angle α est égal à 60°.

Selon un mode de réalisation, les angles d'écartements α sont égaux d'un groupe à l'autre.

En variante, l'angle d'écartement α des lasers d'un groupe 11a, 11b est différent de l'angle d'écartement α des lasers d'au moins un autre groupe 11b, 11a.

Par ailleurs, selon un mode de réalisation, les lasers 13 des différents groupes 11a, 11b ne sont pas alignés les uns avec les autres selon une direction parallèle à l'axe de défilement A_{d}. Par exemple, dans le cas de deux groupes 11a, 11b, les lasers du premier groupe 11a ne sont pas alignés avec les lasers 13 du deuxième groupe 11b selon une direction parallèle à l'axe de défilement A_{d}. Ainsi, la direction principale d'émission de chaque laser 13 du premier groupe 11a forme un angle non nul, appelé angle de déphasage, avec la direction principale d'émission d'un laser du deuxième groupe 11a 11b, cet angle de déphasage étant inférieur aux angle d'écartement α des lasers des premier et deuxième groupes.

Par exemple, si les angles d'écartement des lasers des premier et deuxième groupes 11a, 11b sont identiques, l'angle de déphasage est égal à la moitié de l'angle d'écartement.

Un tel déphasage permet d'éviter qu'une zone donnée de la surface du produit long 3 ne soit située dans la zone centrale de la portion attribuée à un laser 13 du premier groupe 11a et dans la zone centrale de la portion attribuée à un laser 13 du deuxième groupe 11b, ou inversement dans une zone périphérique de ces deux portions, et donc d'obtenir une surface de qualité plus homogène.

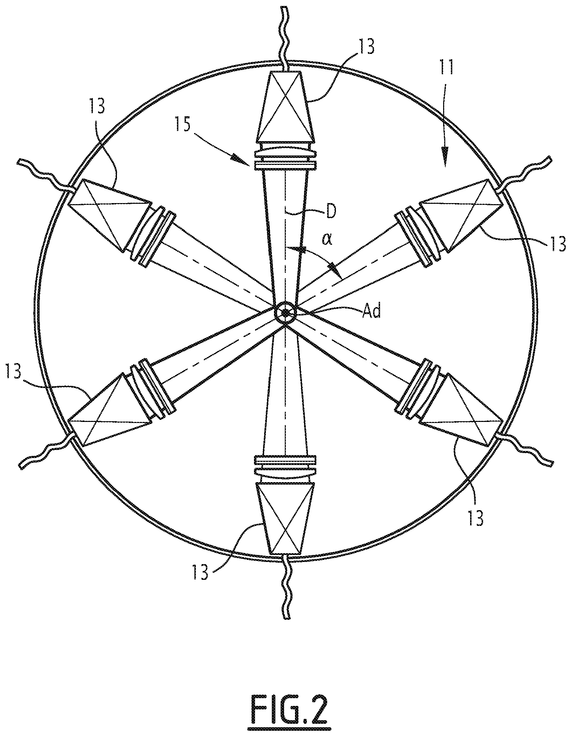

Dans l'exemple illustré sur la Figure 2, le groupe 11 de lasers comprend six lasers, répartis uniformément autour d'un fil 3, et sont répartis autour d'un même cercle dont le centre est l'axe de défilement A_{d}. La direction principale d'émission Dᵢ de chaque laser 13 forme alors avec les directions principales d'émission Dᵢ₋₁, Dᵢ₊₁ de deux autres lasers 13 de ce groupe 11 un angle fixe de 60°.

Les lasers 13 d'un même groupe 11, 11a, 11b sont de préférence identiques. Les lasers 13 sont de préférence des lasers opérant dans le proche infra-rouge, c'est-à-dire de longueur d'onde comprise entre 1000 et 1100 nm.

Les lasers 13 sont par exemple des lasers fibrés.

Les lasers 13 sont de préférence propres à émettre sélectivement des faisceaux continus ou pulsés. Les faisceaux pulsés ont par exemple une durée d'impulsion de l'ordre de la nanoseconde, de la microseconde ou de la milliseconde.

Les lasers 13 comprennent par exemple des lasers Nd :YAG et/ou des lasers YLS.

Lorsque l'ensemble 7 de décapage comprend deux groupes 11a, 11b de lasers, le premier groupe 11a de lasers est par exemple destiné à décaper la couche d'oxyde à la surface du produit long 3 en ablatant au moins une partie d'une couche de métal d'épaisseur prédéterminée à la surface du produit long 3, et le deuxième groupe 11b de lasers est destiné à finaliser l'ablation de la couche de métal d'épaisseur prédéterminée tout en conférant à la surface du produit long 3 la rugosité prédéterminée.

Dans ce cas, les lasers du premier groupe 11a fonctionnent de préférence dans un mode différent du mode des lasers du deuxième groupe 11b. En effet, les lasers du premier groupe 11a sont alors configurés de manière à décaper efficacement la couche d'oxyde, et optionnellement ajuster partiellement la rugosité à la surface du fil décapé, et les lasers du deuxième groupe 11b sont configurés de manière à ajuster la rugosité à la surface du fil décapé, tout en éventuellement finissant le décapage.

Par exemple, les lasers du premier groupe 11a sont des lasers YLS configurés pour fonctionner en mode continu, tandis que les lasers du deuxième groupe 11b sont des lasers Nd :YAG configurés pour fonctionner en mode pulsé, notamment avec une durée d'impulsion de l'ordre de la nanoseconde.

En variante, les lasers des premier et deuxième groupes 11a, 11b sont identiques. A titre d'exemple, les lasers des premier et deuxième groupe 11a, 11b sont des lasers fonctionnant en mode pulsé, notamment des lasers Nd :YAG, ou des lasers fonctionnant en mode continu, notamment des lasers YLS. Dans ce cas, les lasers du premier groupe sont de préférence configurés avec des paramètres de fonctionnement, par exemple en termes d'intensité ou de fréquence, différents de ceux des lasers du deuxième groupe.

L'ensemble 7 de décapage comprend de préférence un système de répartition mécanique ou optique permettant à chaque laser 13 de couvrir la portion de la surface du produit long attribuée à ce laser.

En particulier, le système de répartition est destiné à mettre en forme les faisceaux laser émis par les lasers 13 de chaque groupe et/ou pour déplacer ces faisceaux laser sur la surface du produit long 3, de telle sorte que les faisceaux laser émis par les lasers de chaque groupe couvrent l'ensemble de la surface du produit long 3 lors de son défilement.

Par exemple, dans le cas d'un fil, le système de répartition est configuré de telle sorte que les angles βᵢ associés aux différents lasers 13 d'un groupe 11, 11a et 11b soient tels que l'ensemble de la surface du fil 3 soit couverte par les lasers, ce qui implique que la somme des angles βᵢ soit supérieur ou égale à 360°.

Notamment, le système de répartition est destiné à mettre en forme les faisceaux laser émis par les lasers de chaque groupe 11, 11a, 11b, et/ou pour générer un balayage de la surface du produit long 3 par les faisceaux laser, de telle sorte que les faisceaux laser émis par chaque laser couvrent la portion attribuée à ce laser.

Le système de répartition est par exemple un système optique 15, configuré pour mettre en forme les faisceaux issus de chaque laser 13 de telle sorte que ces faisceaux, une fois mis en forme, couvrent la portion attribuée à ce laser 13.

Un tel système comprend par exemple, pour chaque laser 13, un dispositif optique 15 (Figure 2) configuré pour transformer les spots des faisceaux émis par le laser 13 en bandes orthogonales à la direction de défilement du produit long 3. Les bandes sont alors de longueur égale à la largeur de la portion attribuée à chaque laser (i.e. la distance entre les deux droites de la surface du produit long qui délimitent la portion).

La largeur de chaque bande, dans la direction de défilement, est variable en fonction de la vitesse de défilement du fil. Elle est comprise entre 20 µm et 200 µm, et typiquement de l'ordre de 50 µm.

De la sorte, l'ensemble de la surface du produit long 3 peut être traitée par un nombre limité de lasers 13.

Chaque dispositif optique comprend par exemple des lentilles, des miroirs sphériques et/ou des miroirs cylindriques propres à régler la forme et les dimensions du faisceau laser.

Dans ce mode de réalisation, les lasers 13 sont de préférence des lasers à haute puissance moyenne ou à haute puissance d'impulsion, de manière à conserver une densité d'énergie suffisamment forte sur l'ensemble de la portion associée à chaque laser.

En variante, le système de répartition est un système de balayage optique et mécanique.

Un tel système de balayage comprend par exemple, pour chaque laser 13, un dispositif optique et mécanique propre à mettre en forme les faisceaux générés par le laser 13 pour en concentrer la puissance, et pour déplacer les faisceaux ainsi mis en forme sur la surface du produit long 3 en défilement de telle sorte que les faisceaux impactent l'ensemble de la portion attribuée au laser 13.

En particulier, le dispositif optique et mécanique est propre à déplacer les faisceaux générés par le laser 13 sur la surface du produit long 3, de telle sorte que chaque laser puisse impacter la portion de surface attribuée au laser.

Par exemple, le dispositif optique et mécanique est configuré pour déplacer les faisceaux selon une première et une deuxième directions de balayage orthogonales l'une à l'autre, notamment suivant plusieurs lignes successives parallèles. Le balayage est ainsi réalisé, pour chaque ligne, suivant la première direction, et pour passer d'une ligne à la suivante selon la deuxième direction.

Les première et deuxième directions de balayage forment un angle compris entre 0° et 90° avec l'axe de défilement. Par exemple, ces directions sont respectivement parallèle et orthogonale à l'axe de défilement, ou respectivement orthogonale et parallèle à l'axe de défilement, ou forment chacune un angle non nul, par exemple d'environ 45°, avec l'axe de défilement.

Le dispositif optique et mécanique est configuré pour générer un tel balayage selon une vitesse de balayage et un pas de balayage adaptés en fonction du traitement souhaité, comme décrit ci-après.

Par exemple, les faisceaux issus de chaque laser 13 balayent la portion associée à ce laser selon des lignes parallèles à la première direction de balayage, les lignes étant décalées les unes par rapport aux autres selon le pas de balayage choisi.

Un tel système optique et mécanique comprend par exemple au moins un miroir galvanométrique et peut en outre contenir une roue polygonale.

Ce mode de réalisation ne nécessite pas l'utilisation de lasers à aussi haute puissance que dans le cas du système optique 15, puisque la taille de l'impact de chaque faisceau généré par le laser est faible.

De préférence, l'ensemble 7 de décapage comprend une enceinte 17, à l'intérieur de laquelle sont reçus le ou les groupe(s) 11,11a, 11b de lasers 13 ainsi que le système de répartition. L'enceinte 17 comprend bien entendu deux ouvertures sur deux parois opposées pour mettre le défilement du produit long 3 à travers l'enceinte 17. L'enceinte 17 est par exemple en acier inoxydable.

L'utilisation d'une telle enceinte 17 permet de protéger les éléments extérieurs ainsi que les opérateurs des rayonnements lasers.

De préférence, les parois de l'enceinte 17 sont équipées de systèmes de sécurité actifs et/ou passifs permettant de couper les lasers en cas de problèmes (par exemple en cas de surchauffe ou de perçage de l'enceinte). Par exemple, l'enceinte est munie d'une double paroi contenant un fluide dont la pression ou le niveau est mesuré en continu.

En outre, des caméras sont de préférence installées à l'intérieur de l'enceinte afin de contrôler le bon déroulement du traitement.

L'unité 9 de pilotage est destinée à commander l'ensemble 7 de décapage pour lui imposer des paramètres de fonctionnement permettant d'obtenir le décapage de l'ensemble de la couche d'oxydes sur l'ensemble de la surface du produit long 3, l'ablation d'une couche de métal à la surface du produit long 3, cette couche de métal étant d'épaisseur prédéterminée, et pour obtenir une rugosité prédéterminée sur la surface du produit long 3 à l'issue du traitement.

L'unité 9 de pilotage comprend notamment une mémoire, un calculateur et une interface homme/machine.

L'unité 9 de pilotage est à cette fin propre à acquérir des informations relatives au produit long 3 en défilement.

Ces informations comprennent en particulier la vitesse de défilement du produit long 3 dans l'installation 5 de traitement. La connaissance de cette vitesse est en effet nécessaire pour ajuster les paramètres de fonctionnement de l'ensemble 7 de décapage afin que chaque point de la surface du fil soit exposée aux rayonnements lasers pendant une durée adéquate.

Ces informations comprennent en outre au moins une dimension caractéristique du produit long 3 dans un plan transverse à la direction de défilement du produit long 3. Cette dimension est par exemple, s'il s'agit du fil, le diamètre de ce fil. Si le produit long est un ruban, les dimensions caractéristiques sont par exemple la largeur et l'épaisseur du ruban. Cette ou ces dimensions permettent de connaitre l'étendue de la surface à traiter, et de focaliser les rayonnements laser émis par l'ensemble 7 de décapage précisément sur la surface à traiter.

Ces informations incluent de préférence une position de l'axe de défilement A_{d} dans un plan orthogonal à cet axe. En effet, il peut arriver que l'axe de défilement A_{d} change de position dans un plan orthogonal à cet axe A_{d}, ce qui peut nécessiter, pour garantir l'état de surface souhaité, de modifier la focalisation des lasers 13 et/ou la répartition des faisceaux laser.

Les informations acquises par l'unité 9 de pilotage sont par exemple entrées par un opérateur via l'interface de l'unité 9 de pilotage, et enregistrées sur la mémoire.

En variante ou en complément, l'installation 5 de traitement est munie d'un système de détermination, notamment de mesure de la vitesse de défilement du produit long 3 et/ou d'un système de détermination ou de mesure de la position du produit long 3 au sein de l'ensemble 7 de décapage, notamment de la position de l'axe de défilement A_{d}. Dans ce cas, les informations relatives au produit long en défilement sont fournies à l'unité de pilotage en temps réel par le ou les système(s) de détermination.

L'unité 9 de pilotage est également configurée pour acquérir des paramètres de traitement souhaités pour le produit long 3 à traiter.

Ces paramètres de traitement incluent notamment une rugosité souhaitée pour le produit long 3 à l'issue du traitement.

Ces paramètres de traitement incluent de préférence des paramètres relatifs à la couche d'oxydes à ablater et/ou une épaisseur de la couche de métal que l'on souhaite ablater à la surface du produit long 3.

Les paramètres de traitement sont par exemple saisis par un opérateur via l'interface de l'unité 9 de pilotage, et enregistrés sur la mémoire de l'unité 9 de pilotage, ou bien entrés automatiquement en fonction du produit à traiter.

En variante, ou en complément, au moins certains de ces paramètres de traitement, en particulier la rugosité souhaitée pour le produit long 3 à l'issue du traitement, sont fournies par l'installation 6 assurant le tréfilage du fil, ce qui permet d'ajuster en temps réel l'état de surface du fil pour en faciliter le tréfilage.

L'unité 9 de pilotage est configurée pour déterminer des paramètres de fonctionnement à imposer à l'ensemble 7 de décapage, en particulier aux lasers du ou des groupe(s) 11, 11a, 11b de lasers pour obtenir le décapage de la couche d'oxyde à la surface du produit long 3, pour ablater la couche de métal d'épaisseur prédéterminée à la surface du produit long, et pour obtenir la rugosité prédéterminée à la surface du produit long 3. L'épaisseur de la couche de métal et la rugosité prédéterminées sont des paramètres préalablement acquis par l'unité 9 de pilotage, comme décrit ci-dessus.

A cette fin, l'unité 9 de pilotage est propre à enregistrer, sur la mémoire, des données expérimentales de référence, permettant au calculateur de déterminer, en fonction des paramètres de traitement souhaités et des informations relatives au produit long en défilement, les paramètres de fonctionnement à imposer à l'ensemble 7 de décapage.

Ces paramètres de fonctionnement comprennent par exemple une puissance d'émission des lasers 13, un mode de fonctionnement des lasers 13 (faisceaux continus ou pulsés), et la durée d'interaction laser/matière (correspondant à la durée pendant laquelle un faisceau laser impacte la surface du produit).

En effet, quelle que soit la vitesse de défilement, chaque portion de la surface doit avoir été traitée et doit avoir reçu une densité d'énergie requise et donnée par l'unité 9 de pilotage. Cette densité d'énergie sera fonction de la durée d'interaction laser/matière et de la densité de puissance du faisceau laser.

Pour un laser en mode continu, la durée d'interaction laser/matière, qui dépend de la vitesse de défilement, dépend des réglages du système de répartition. Par exemple, si le système de répartition inclut, au moins pour certains lasers 13, un dispositif optique 15, la durée d'interaction laser/matière est réglée en faisant varier la largeur des bandes que forme le dispositif optique 15 à partir des spots lasers.

Si le système de répartition inclut, au moins pour certains lasers 13, un système de balayage, la durée d'interaction laser/matière est réglée en faisant varier la vitesse de balayage et le pas de balayage.

Pour un laser en mode pulsé, comme pour un laser en mode continu, la durée d'interaction laser/matière, qui dépend de la vitesse de défilement, dépend des réglages du système de répartition. Par exemple, si le système de répartition inclut, au moins pour certains lasers 13, un dispositif optique 15, la durée d'interaction laser/matière est réglée en faisant varier la largeur des bandes que forme le dispositif optique 15 à partir des spots lasers. Si le système de répartition inclut, au moins pour certains lasers 13, un système de balayage, la durée d'interaction laser/matière est réglée en faisant varier la vitesse de balayage et le pas de balayage.

Pour un laser en mode pulsé, la durée d'interaction laser/matière est en outre réglée en faisant varier la durée et la fréquence d'impulsion des faisceaux pulsés.

Ainsi, les paramètres de fonctionnement incluent, selon les cas, la largeur des bandes formées le par dispositif optique 15, la vitesse et le pas de balayage, et/ou la durée et la fréquence d'impulsion des faisceaux pulsés.

Par exemple, la puissance d'émission des lasers 13 est choisie d'autant plus grande que la vitesse de défilement du produit long 3 est élevée et/ou que l'épaisseur de la couche de métal à ablater est grande.

En outre, plus la vitesse de défilement est élevée, plus la fréquence des pulses doit être élevée, pour que l'on soit assuré qu'une portion donnée est traitée par le laser 13 qui la concerne de façon adéquate.

Par ailleurs, la vitesse de balayage est choisie d'autant plus grande que la vitesse de défilement du produit long est élevée.

En général, si l'épaisseur de la couche de métal à ablater est faible, on choisira une vitesse de défilement élevée en utilisant ainsi une vitesse de balayage élevée.

Les paramètres de fonctionnement sont également, comme décrits ci-dessus, sélectionnés de manière à obtenir une surface de rugosité prédéterminée.

La rugosité souhaitée est par exemple obtenue en adaptant le mode de fonctionnement des lasers 13, par exemple en sélectionnant le mode pulsé, et en adaptant la durée d'interaction laser/matière sur la surface du produit long de telle sorte que les impacts lasers génèrent à la surface du produit long 3 des cratères de dimensions et d'espacement ou de recouvrement conférant à la surface la rugosité souhaitée.

Lorsque le système de répartition est un système de balayage optique et mécanique, la rugosité est par exemple ajustée en sélectionnant le pas de balayage en fonction de la largeur du faisceau laser.

Par exemple, si la largeur du faisceau est de 75µm, les faisceaux issus de chaque laser balayent la portion selon des lignes de largeur égale à 75µm, formant des sillons de cette largeur. Si le pas de balayage est choisi inférieur ou égal à 75 µm, notamment 25µm, le balayage de la portion génèrera une surface de rugosité très faible. Si au contraire le pas de balayage est choisi supérieur à la largeur du faisceau, par exemple 100 µm, il subsistera entre chaque sillon des crêtes conférant à la surface du produit une rugosité plus élevée.

Les paramètres de fonctionnement des lasers d'un même groupe 11, 11a, 11b sont généralement identiques les uns aux autres. C'est en particulier le cas si les portions de surface traitées par ces lasers 13 sont de dimensions identiques, les lasers étant localisés à une même distance de la portion à traiter.

En revanche, lorsque l'ensemble 7 de décapage comprend deux ou plusieurs groupes, les paramètres de fonctionnement diffèrent généralement d'un groupe à l'autre.

Notamment, l'ensemble 7 de décapage comprenant deux groupes, les paramètres de fonctionnement des lasers du premier groupe 11a sont de préférence sélectionnés de manière à décaper efficacement la couche d'oxyde, tandis que les paramètres de fonctionnement des lasers du deuxième groupe 11b sont sélectionnés de manière à conférer à la surface du produit long décapé la rugosité souhaitée.

Par exemple, les lasers du premier groupe 11a sont configurés pour fonctionner en mode continu, la puissance des lasers étant sélectionnée de manière à décaper l'ensemble de la couche d'oxyde, et les lasers du deuxième groupe 11b sont configurés en mode pulsé, la durée de pulse et, le cas échéant, le pas de balayage est choisi de telle sorte que les impacts de ces pulses génèrent à la surface du produit long 3 la rugosité souhaitée.

L'unité 9 de pilotage est apte à commander l'ensemble 7 de décapage selon les paramètres de fonctionnement ainsi déterminés.

L'unité 9 de pilotage est configurée pour déterminer les paramètres de fonctionnement avant tout décapage, et de préférence lors du traitement, en particulier suite à la détection d'un changement d'un ou plusieurs paramètres relatifs au produit long en défilement ou des paramètres de traitement souhaités.

Par exemple, si la vitesse de défilement est déterminée en continu ou en certains instants par un système de détermination de la vitesse de défilement et fournie à l'unité 9 de pilotage, l'unité 9 de pilotage est configurée pour déterminer de nouveaux paramètres de fonctionnement en cas de changement de la vitesse de défilement, et à appliquer ces nouveaux paramètres de fonctionnement à l'ensemble 7 de décapage.

En outre, si la position de l'axe de défilement A_{d} est déterminée en continu ou en certains instants, par un système de détermination de cette position, et fournie à l'unité 9 de pilotage, l'unité 9 de pilotage est configurée pour déterminer de nouveaux paramètres de fonctionnement en cas de changement de cette position, et à appliquer ces nouveaux paramètres de fonctionnement à l'ensemble 7 de décapage.

Selon un autre exemple, si le produit long est tréfilé directement à la sortie de l'ensemble 7 de décapage, et que sa tréfilabilité s'avère non suffisante, la rugosité souhaitée peut être modifiée pour augmenter la tréfilabilité. L'unité 9 de pilotage est configuré pour recevoir la nouvelle rugosité souhaitée, pour déterminer de nouveaux paramètres de fonctionnement, adaptés pour obtenir la nouvelle rugosité, et pour appliquer ces nouveaux paramètres de fonctionnement à l'ensemble 7 de décapage.

On va maintenant décrire un procédé de traitement d'un produit long 3 selon un mode de réalisation. Le procédé de traitement est de préférence mis en œuvre au moyen d'une installation 5 de traitement telle que décrite ci-dessus.

Dans cet exemple, on considèrera une installation 5 dans laquelle l'ensemble 7 de décapage comprend deux groupes de lasers à la suite l'un de l'autre dans la direction de défilement du produit.

On considèrera par ailleurs que le produit long 3 est un fil, et que chaque groupe 11a, 11b de lasers comprend six lasers 13 uniformément répartis autour du fil 3, et localisés sur la circonférence d'un cercle dont le centre est occupé par le centre du fil 3.

Chaque laser 13 de chaque groupe 11a, 11b est ainsi destiné à traiter une portion de la surface du fil s'étendant entre deux droites parallèles à l'axe de défilement A_{d} du fil 3 et définissant avec cet axe un angle β d'au moins 60°.

Ce procédé de traitement est par exemple mis en œuvre après un traitement de recuit effectué sur le produit long 3 sous forme de couronne.

Le procédé de traitement est réalisé sur le produit long 3 en défilement, suite à son débobinage.

Le procédé comprend une étape d'acquisition, par l'unité 9 de pilotage, de paramètres ou informations relatifs au produit long en défilement et de paramètres de traitement souhaités.

Comme décrit ci-dessus, les paramètres relatifs au produit long en défilement comprennent la nature du produit long 3 (par exemple fil ou ruban), la vitesse de défilement du produit long 3 dans l'installation 5 de traitement et/ou une dimension caractéristique du produit long 3 dans un plan transverse à la direction de défilement du produit long 3. Ces informations sont par exemple entrées par un opérateur via l'interface de l'unité 9 de pilotage, ou saisies automatiquement lors du chargement du produit long 3 dans l'installation, et enregistrés sur la mémoire.

En variante ou en complément, les informations relatives au produit long en défilement sont déterminées par un système de détection de la vitesse de défilement du produit long 3 et/ou un système de détection de la position du produit long 3 au sein de l'ensemble de décapage.

Les paramètres de traitement souhaités pour le produit long 3 incluent la rugosité souhaitée pour le produit long 3 à l'issue du traitement, et, de préférence, des paramètres relatifs à la couche d'oxydes à ablater et/ou une épaisseur de la couche de métal que l'on souhaite ablater à la surface du produit long 3.

Les paramètres de traitement sont par exemple saisis par un opérateur via l'interface de l'unité 9 de pilotage, et enregistrés sur la mémoire de l'unité 9 de pilotage.

Le procédé comprend alors une étape de détermination, par l'unité 9 de pilotage, de paramètres de fonctionnement à imposer aux lasers du ou des groupe(s) 11, 11a, 11b de lasers pour obtenir le décapage de la couche d'oxyde à la surface du produit long 3, pour ablater la couche de métal d'épaisseur prédéterminée à la surface du produit long, et pour obtenir la rugosité prédéterminée à la surface du produit long 3.

Ces paramètres de fonctionnement sont déterminés à partir de données expérimentales de référence enregistrées sur la mémoire de l'unité de pilotage 9.

Ces paramètres de fonctionnement comprennent par exemple la puissance d'émission des lasers 13, le mode de fonctionnement des lasers 13 (faisceaux continus ou pulsés), et, le cas échéant, la durée et la fréquence d'impulsion des faisceaux pulsés.

Si le système de répartition est un système de balayage optique et mécanique, les paramètres de fonctionnement comprennent, pour chaque laser 13, des paramètres de balayage de la portion attribuée au laser 13 par ce laser, notamment la vitesse de balayage et le pas de balayage.

L'unité 9 de pilotage transmet ensuite à l'ensemble 7 de décapage les paramètres de fonctionnement ainsi déterminés.

L'ensemble 7 de décapage traite alors la surface du produit long 3 selon ces paramètres de fonctionnement.

En particulier, chaque laser 13 émet des faisceaux laser dans le mode de fonctionnement choisi, et avec la puissance commandée par l'unité 9 de pilotage.

Si le mode de fonctionnement des lasers 13 d'au moins un groupe 11, 11a, 11b est le mode pulsé, chaque laser 13 émet des pulses laser dont la durée et la fréquence sont celles commandées par l'unité 9 de pilotage.

Par ailleurs, si le système de répartition des lasers 13 d'au moins un des groupes 11, 11a, 11b est un système de balayage, ce système de balayage génère un balayage des faisceaux lasers émis par chaque laser selon la vitesse de balayage et le pas de balayage commandés par l'unité 9 de pilotage.

Lors du défilement du produit long 3 dans l'ensemble 7 de décapage, chaque laser 13 de chaque groupe 11, 11a, 11b émet des faisceaux lasers pour traiter la portion de la surface du produit qui lui est attribuée, selon les paramètres de fonctionnement imposés par l'unité 9 de pilotage.

Puisque le produit long 3 est en défilement, la portion traitée par chaque laser 13 à l'issue du traitement s'étend sur toute la longueur du produit long 3 dans la direction de défilement (différentes sections successives de chaque portion défilant devant l'ensemble de décapage).

Si l'ensemble de décapage comprend un premier groupe de premiers lasers et un deuxième groupe de deuxièmes lasers, la surface est traitée successivement par les lasers du premier groupe puis par les lasers du deuxième groupe.

Selon un mode de réalisation, chaque groupe 11 de lasers traite l'ensemble de la surface du produit long. Dans ce mode de réalisation, l'ensemble de la surface du produit long est traitée successivement par les lasers du premier groupe 11a, puis par les lasers du deuxième groupe 11b, et le cas échéant, par les lasers de chaque groupe additionnel.

En variante, au moins un groupe 11 de lasers traite une partie seulement de la surface du produit long. Dans cette variante, les groupes 11 de lasers, pris ensemble, traitent l'ensemble de la surface du produit long.

A l'issue du traitement, le produit long 3 est dépourvu d'oxydes à sa surface. En particulier, le produit long 3 est dépourvu des oxydes résultant du séjour du produit à haute température en atmosphère oxydante (notamment lors du recuit).

En outre, le produit long 3 présente un profil de rugosité caractéristique, différent de celui obtenu par un décapage chimique.

Par profil de rugosité, on entend le profil dérivé du profil primaire par suppression des composantes de grande longueur d'onde, en appliquant un filtre de profil λc pour supprimer les composantes de longueur d'onde supérieures à λc (notamment les composantes d'ondulation), comme décrit dans la norme NF EN ISO 4287 :1998. Dans le cas présent, un considèrera les composantes de longueur d'onde inférieures à λc=2.5 mm.

En particulier, suite à un décapage dans un bain, le produit long présente une surface granuleuse, et présente à sa surface des motifs irréguliers et non périodiques.

Au contraire, la surface du produit long 3 traité selon l'invention a un profil de rugosité périodique, i.e. présente à sa surface des motifs de rugosité périodiques.

Ces motifs de rugosité forment, sur le profil de rugosité, des éléments de profil (comme définis dans la norme NF EN ISO 4287 :1998).

Comme précisé dans la norme NF EN ISO 4287 :1998, le profil de rugosité est déterminé à partir d'un profil de surface résultant de l'intersection de la surface réelle par un plan de coupe donné, dont une normale est parallèle à la surface réelle et de direction appropriée.

La largeur des motifs périodiques est comprise entre 5 µm et 1 mm, et par exemple comprise entre 5 µm et 200 µm.

Par exemple, les motifs sont des stries périodiques, comprenant une alternance régulière de lignes en saillie (ou crêtes) et de sillons.

Les sillons correspondent aux zones de la surface du produit long 3 ayant reçu la plus grande densité d'énergie des lasers 13, tandis que les lignes en saillie sont les zones de la surface du produit long 3 ayant reçu la plus faible densité d'énergie des lasers 13.

Les sillons et lignes s'étendent par exemple dans une direction parallèle à l'axe central du produit long 3, dans une direction orthogonale à l'axe central du produit long 3, ou dans une direction oblique par rapport à l'axe central du produit long (notamment formant un angle de 45° avec l'axe central).

Par exemple, si le système de répartition est un système de balayage optique et mécanique, la direction d'orientation des lignes et sillons correspond à la direction de balayage des faisceaux laser (i.e. la première direction de balayage définie ci-dessus). La distance entre sillons (i.e. selon la deuxième direction de balayage) est alors égale au pas de balayage.

En référence à l'exemple ci-dessus, si la largeur du faisceau est de 75 µm et le pas de balayage est égal à 100 µm, les sillons auront une largeur d'environ 75 µm tandis que les lignes en saillie (ou crêtes) auront une largeur d'environ 25 µm.

De manière générale, la distance entre sillons (correspondant à la largeur des motifs périodiques) est comprise entre 5 µm et 1 mm, et par exemple comprise entre 5 µm et 200 µm. Par distance entre sillons on entend bien sûr la distance entre chaque sillon et un sillon adjacent.

En variante, les motifs périodiques sont formés par une alternance régulière de pics et de creux selon une première et une deuxième directions distinctes.

La première et la deuxième directions sont par exemple orthogonales l'une à l'autre, notamment respectivement parallèle à l'axe central du produit long 3 et orthogonale à l'axe central.

Selon un autre exemple, au moins l'une des première et deuxième directions n'est ni parallèle ni orthogonale à l'axe central du produit long 3. Dans tous les cas, les motifs périodiques seront visualisés, sur le profil de rugosité, sous la forme d'éléments de profils périodiques chacun constitué d'un pic et d'un creux.

La hauteur des éléments de profil, par exemple la hauteur moyenne entre les crêtes et les sillons, ou la hauteur moyenne entre les pics et les creux, est généralement comprise entre 0,2 µm et 500 µm.

Pour mesurer la distance entre les éléments de profil et leur hauteur, comme expliqué ci-dessus, on choisira un plan de coupe approprié, par exemple en visualisant au préalable la surface du produit par imagerie, notamment par microscopie optique, microscopie électronique à balayage, ou encore au moyen d'un rugosimètre.

Par exemple, si les motifs périodiques sont des sillons et des lignes en saillie parallèles à l'axe central du produit long 3, on choisira un plan de coupe orthogonal à l'axe central. A l'inverse, si les lignes et sillons sont orthogonales à l'axe central du produit long 3, on choisira un plan de coupe parallèle à l'axe central.

Si les motifs périodiques sont des alternances de pics et de creux selon une première et une deuxième directions, on choisira de préférence deux plans de coupe parallèles à la première et à la deuxième directions respectivement, et on évaluera la largeur et hauteur moyennes dans chacune de ces directions.

De préférence, les déchets générés par le décapage de l'oxyde et l'ablation de métal par l'ensemble 7 de décapage sont récupérés par des systèmes d'aspiration de poussières et de fumées.

De préférence, lors du traitement, les paramètres de fonctionnement sont recalculés par l'unité 9 de pilotage en cas de modification de paramètres relatifs au produit long en défilement, ou des paramètres de traitement souhaités.

Par exemple, si la vitesse de défilement est déterminée en continu ou en certains instants par un système de détermination de la vitesse de défilement et fournie à l'unité 9 de pilotage, une modification de la vitesse de défilement entraine un calcul de nouveaux paramètres de fonctionnement, adaptés à la nouvelle vitesse de défilement, et ces nouveaux paramètres de fonctionnement sont appliqués à l'ensemble 7 de décapage.

En outre, si la position de l'axe de défilement A_{d} est déterminée en continu ou en certains instants, par un système de détermination de cette position, et fournie à l'unité 9 de pilotage, l'unité 9 de pilotage déterminer de nouveaux paramètres de fonctionnement en cas de changement de cette position, et applique ces nouveaux paramètres de fonctionnement à l'ensemble 7 de décapage.

Selon un autre exemple, si le produit long est tréfilé directement à la sortie de l'ensemble 7 de décapage, et que sa tréfilabilité s'avère non suffisante, la rugosité souhaitée peut être modifiée pour augmenter la tréfilabilité. Cette nouvelle rugosité est fournie à l'unité 9 de pilotage, entrainant un calcul de nouveaux paramètres de fonctionnement, adaptés pour obtenir la nouvelle rugosité, et ces nouveaux paramètres de fonctionnement sont appliqués à l'ensemble 7 de décapage.

Selon encore un autre exemple, en cas de dysfonctionnement d'un laser ou des lasers d'un groupe, les paramètres de fonctionnement peuvent être recalculés pour tenir compte de ce dysfonctionnement.

L'installation et le procédé selon l'invention permettant ainsi de traiter de manière efficace, rapidement et sans utilisation de produits néfastes, en assurant à la fois le décapage de la couche d'oxydes présent sur le produit long, en supprimant des défauts de surfaces, oxydes internes, inclusions et/ou zones de composition chimique différente de celle du cœur du métal à la surface du métal sous la couche d'oxyde, et en conférant à la surface du produit long une rugosité le rendant apte à être tréfiler sans opération supplémentaire.

Bien que l'installation et le procédé aient été décrits plus particulièrement en référence à un fil, l'installation et le procédé sont également adaptés au traitement d'autres types de produits longs tels que des rubans.

Par exemple, pour traiter un ruban comprenant deux surfaces principales et deux surfaces s'étendant selon l'épaisseur du ruban, on pourra utiliser un ou des groupe de laser comprenant au moins un laser disposé en regard de chaque surface principale, et au moins un laser disposé en regard de chacune des surfaces s'étendant selon l'épaisseur du ruban.

## Revendications

1. Installation (5) de traitement d'un produit long (3) métallique en défilement en vue d'une étape de tréfilage, le produit long (3) présentant au moins une surface recouverte d'une couche d'oxyde, ladite installation comprenant
- un ensemble (7) de décapage comprenant au moins un groupe (11, 11a, 11b) d'une pluralité de lasers (13) répartis autour du produit long (3) en défilement, chaque laser (13) étant configuré pour émettre des faisceaux sur la surface du produit long (3) en défilement pour la décaper, chaque laser (13) étant destiné au traitement d'une portion associée de la surface du produit long (3),
- une unité (9) de pilotage propre à acquérir des informations relatives au produit long (3) en défilement, les informations comprenant une vitesse de défilement du produit long (3) et au moins une dimension caractéristique du produit long (3) dans un plan orthogonal à un axe (A_{d}) de défilement du produit long,
**caractérisée en ce que** l'unité (9) de pilotage est configurée pour :
- déterminer des paramètres de fonctionnement à imposer à l'ensemble (7) de décapage pour obtenir le décapage de la couche d'oxyde à la surface du produit long (3) et pour ablater une couche de métal d'épaisseur prédéterminée à la surface du produit long (3), et de telle sorte à obtenir à la surface du produit long des motifs de rugosité périodiques, la largeur des motifs périodiques étant comprise entre 5 µm et 1 mm, par comparaison avec des résultats expérimentaux préenregistrés dans l'unité (9) de pilotage, et
- imposer lesdits paramètres de fonctionnement audit ensemble (7) de décapage.

2. Installation (5) de traitement selon la revendication 1, **caractérisée en ce que** les lasers (13) du ou de chaque groupe (11, 11a, 11b) de lasers sont répartis uniformément autour du produit long (3) en défilement.

3. Installation (5) de traitement selon l'une quelconque des revendications 1 ou 2, dans laquelle les paramètres de fonctionnement incluent une puissance d'émission des lasers (13) du ou de chaque groupe (11, 11a, 11b) et/ou une durée d'interaction laser/matière en chaque point de la surface du produit long (3).

4. Installation (5) de traitement selon l'une quelconque des revendications 1 à 3, dans laquelle l'ensemble (7) de décapage comprend un système de répartition configuré pour mettre en forme les faisceaux laser ou pour déplacer les faisceaux laser sur la surface du produit long (3) de telle sorte que les faisceaux laser émis par la pluralité de lasers (13) du ou de chaque groupe (11, 11a, 11b) couvrent l'ensemble de la surface du produit long (3) lors de son défilement.

5. Installation (5) de traitement selon la revendication 4, dans laquelle le système de répartition comprend, pour chaque laser (13) d'au moins un groupe (11, 11a, 11b), un dispositif optique (15) configuré pour transformer chaque faisceau émis par le laser (13) associé en une bande impactant une portion de la surface du produit long (3).

6. Installation (5) de traitement selon la revendication 4 ou 5, dans laquelle le système de répartition comprend, pour chaque laser (3) d'au moins un groupe (11, 11a, 11b), un dispositif de balayage configuré pour déplacer les faisceaux générés par le laser (13) associé sur la surface du produit long (3), selon une vitesse de balayage et un pas de balayage déterminés, de telle sorte que les faisceaux émis par chaque laser (13) impactent une portion de surface du produit long (3).

7. Installation (5) de traitement selon la revendication 6, dans laquelle les paramètres de fonctionnement comprennent la vitesse de balayage et le pas de balayage du dispositif de balayage.

8. Installation (5) de traitement selon l'une quelconque des revendications 5 à 7, dans laquelle la portion de surface du produit long (3) est délimitée par deux droites de la surface du produit long (3) parallèles l'une à l'autre.

9. Installation (5) de traitement selon l'une quelconque des revendications 1 à 8, dans laquelle l'ensemble (7) de décapage comprend un premier groupe (11a) d'une pluralité de premiers lasers répartis autour du produit long (3) en défilement et un deuxième groupe (11b) d'une pluralité de deuxièmes lasers répartis autour du produit long (3) en défilement, chaque deuxième laser étant en aval de chaque premier laser du premier groupe (11a) par rapport à l'axe (A_{d}) de défilement.

10. Installation (5) de traitement selon la revendication 9, dans laquelle les premiers lasers sont configurés pour décaper la couche d'oxyde à la surface du produit long (3) en ablatant une couche de métal d'épaisseur prédéterminée à la surface du produit long (3), et les deuxièmes lasers sont configurés pour conférer à la surface du produit long (3) la rugosité prédéterminée.

11. Installation (5) de traitement selon l'une quelconque des revendications 9 ou 10, dans laquelle les premiers lasers sont des lasers à émission continue, et les deuxièmes lasers sont des lasers à émission continus ou des lasers configurés pour émettre des faisceaux pulsés, notamment des lasers nanoseconde.

12. Procédé de traitement, par une installation (5) de traitement selon l'une quelconque des revendications 1 à 11, d'un produit long (3) métallique en défilement en vue d'une étape de tréfilage, le produit long (3) présentant au moins une surface recouverte d'une couche d'oxyde, comprenant les étapes suivantes :
- acquisition par l'unité (9) de pilotage d'informations relatives au produit long (3) en défilement, les informations comprenant une vitesse de défilement du produit long (3) et au moins une dimension caractéristique du produit long (3) dans un plan transverse à un axe (A_{d}) de défilement du produit long (3),
- détermination par l'unité (9) de pilotage, en fonction des informations relatives au produit long (3) en défilement, de paramètres de fonctionnement à imposer à l'ensemble (7) de décapage pour obtenir le décapage de la couche d'oxyde à la surface du produit long (3) et pour ablater une couche de métal d'épaisseur prédéterminée à la surface du produit long (3), et de telle sorte à obtenir une à la surface du produit long (3) des motifs de rugosité périodiques, la largeur des motifs périodiques étant comprise entre 5 µm et 1 mm, par comparaison avec des résultats expérimentaux préenregistrés dans l'unité (9) de pilotage,
- commande par l'unité (9) de pilotage de l'ensemble (7) de décapage pour imposer lesdits paramètres de fonctionnement à l'ensemble (7) de décapage,
- émission par l'ensemble (7) de décapage, au moyen des lasers (13), de faisceaux laser sur la surface du produit long (3) en défilement selon les paramètres de fonctionnement déterminées par l'unité (9) de pilotage.

13. Produit long (3) métallique destiné à être tréfilé, **caractérisé en ce que** le produit long (3) présentant à sa surface des motifs de rugosité périodiques, la largeur des motifs périodiques étant comprise entre 5 µm et 200 µm.

14. Produit long (3) métallique selon la revendication 13, dans lequel les motifs périodiques consistent en des stries périodiques, comprenant une alternance régulière de lignes en saillie et de sillons, ou en des motifs comprenant une alternance régulière de pics et de creux selon une première et une deuxième directions distinctes.

15. Produit long (3) métallique selon la revendication 14, dans lequel la hauteur moyenne entre les crêtes et les sillons, ou la hauteur moyenne entre les pics et les creux, est comprise entre 0,2 µm et 500 µm.

16. Produit long (3) métallique selon l'une quelconque des revendications 13 à 15, **caractérisé en ce que** le produit long (3) est un fil ou un ruban.

## Patentansprüche

1. Behandlungsanlage (5) eines durchlaufenden länglichen metallischen Produkts (3) zum Zweck eines Drahtziehschritts, wobei das längliche Produkt (3) mindestens eine mit einer Oxidschicht bedeckte Oberfläche aufweist, wobei die Anlage umfasst:
- eine Beizanordnung (7), die mindestens eine Gruppe (11, 11a, 11b) einer Vielzahl von um das durchlaufende längliche Produkt (3) verteilten Lasern (13) umfasst, wobei jeder Laser (13) dazu eingerichtet ist, Strahlen auf die Oberfläche des durchlaufenden länglichen Produkts (3) zu senden, um diese zu beizen, wobei jeder Laser (13) zur Behandlung eines zugeordneten Abschnitts der Oberfläche des länglichen Produkts (3) bestimmt ist,
- eine Steuereinheit (9), die dazu geeignet ist, Informationen bezüglich des durchlaufenden länglichen Produkts (3) zu erfassen, wobei die Informationen eine Durchlaufgeschwindigkeit des länglichen Produkts (3) und mindestens eine charakteristische Abmessung des länglichen Produkts (3) in einer zu einer Durchlaufachse (A_{d}) des länglichen Produkts orthogonalen Ebene umfassen,
**dadurch gekennzeichnet, dass** die Steuereinheit (9) eingerichtet ist, um:
- Betriebsparameter zu bestimmen, die der Beizanordnung (7) aufzuerlegen sind, um das Beizen der Oxidschicht an der Oberfläche des länglichen Produkts (3) zu erzielen und um eine Metallschicht vorbestimmter Dicke an der Oberfläche des länglichen Produkts (3) abzutragen, und derart, dass an der Oberfläche des länglichen Produkts periodische Rauheitsmuster erhalten werden, wobei die Breite der periodischen Muster zwischen 5 µm und 1 mm liegt, durch Vergleich mit in der Steuereinheit (9) vorab gespeicherten experimentellen Ergebnissen, und
- die Betriebsparameter der Beizanordnung (7) aufzuerlegen.

2. Behandlungsanlage (5) nach Anspruch 1, **dadurch gekennzeichnet, dass** die Laser (13) der oder jeder Lasergruppe (11, 11a, 11b) gleichmäßig um das durchlaufende längliche Produkt (3) verteilt sind.

3. Behandlungsanlage (5) nach einem der Ansprüche 1 oder 2, wobei die Betriebsparameter eine Emissionsleistung der Laser (13) der oder jeder Gruppe (11, 11a, 11b) und/oder eine Dauer der Laser/Material-Interaktion an jedem Punkt der Oberfläche des länglichen Produkts (3) einschließen.

4. Behandlungsanlage (5) nach einem der Ansprüche 1 bis 3, wobei die Beizanordnung (7) ein Verteilungssystem umfasst, das dazu eingerichtet ist, die Laserstrahlen zu formen oder die Laserstrahlen über die Oberfläche des länglichen Produkts (3) zu bewegen, so dass die von der Vielzahl von Lasern (13) der oder jeder Gruppe (11, 11a, 11b) gesendeten Laserstrahlen beim Durchlauf des länglichen Produkts (3) dessen gesamte Oberfläche abdecken.

5. Behandlungsanlage (5) nach Anspruch 4, wobei das Verteilungssystem für jeden Laser (13) mindestens einer Gruppe (11, 11a, 11b) eine optische Vorrichtung (15) umfasst, die dazu eingerichtet ist, jeden von dem zugeordneten Laser (13) gesendeten Strahl in ein Band umzuwandeln, das auf einen Oberflächenabschnitt des länglichen Produkts (3) auftrifft.

6. Behandlungsanlage (5) nach Anspruch 4 oder 5, wobei das Verteilungssystem für jeden Laser (13) mindestens einer Gruppe (11, 11a, 11b) eine Abtasteinrichtung umfasst, die dazu eingerichtet ist, die von dem zugeordneten Laser (13) erzeugten Strahlen mit einer bestimmten Abtastgeschwindigkeit und einem bestimmten Abtastschritt über die Oberfläche des länglichen Produkts (3) zu bewegen, so dass die von jedem Laser (13) gesendeten Strahlen auf einen Oberflächenabschnitt des länglichen Produkts (3) auftreffen.

7. Behandlungsanlage (5) nach Anspruch 6, wobei die Betriebsparameter die Abtastgeschwindigkeit und den Abtastschritt der Abtasteinrichtung umfassen.

8. Behandlungsanlage (5) nach einem der Ansprüche 5 bis 7, wobei der Oberflächenabschnitt des länglichen Produkts (3) von zwei zueinander parallelen Geraden der Oberfläche des länglichen Produkts (3) begrenzt ist.

9. Behandlungsanlage (5) nach einem der Ansprüche 1 bis 8, wobei die Beizanordnung (7) eine erste Gruppe (11a) einer Vielzahl von ersten, um das durchlaufende längliche Produkt (3) verteilten Lasern und eine zweite Gruppe (11b) einer Vielzahl von zweiten, um das durchlaufende längliche Produkt (3) verteilten Lasern umfasst, wobei jeder zweite Laser in Bezug auf die Durchlaufachse (A_{d}) stromabwärts von jedem ersten Laser der ersten Gruppe (11a) angeordnet ist.

10. Behandlungsanlage (5) nach Anspruch 9, wobei die ersten Laser dazu eingerichtet sind, die Oxidschicht an der Oberfläche des länglichen Produkts (3) zu beizen, indem sie eine Metallschicht vorbestimmter Dicke an der Oberfläche des länglichen Produkts (3) abtragen, und die zweiten Laser dazu eingerichtet sind, der Oberfläche des länglichen Produkts (3) die vorbestimmte Rauheit zu verleihen.

11. Behandlungsanlage (5) nach einem der Ansprüche 9 oder 10, wobei die ersten Laser Laser mit kontinuierlicher Emission sind, und die zweiten Laser Laser mit kontinuierlicher Emission oder Laser sind, die dazu eingerichtet sind, gepulste Strahlen zu senden, insbesondere Nanosekundenlaser.

12. Verfahren zur Behandlung eines durchlaufenden länglichen metallischen Produkts (3) zum Zweck eines Drahtziehschritts durch eine Behandlungsanlage (5) nach einem der Ansprüche 1 bis 11, wobei das längliche Produkt (3) mindestens eine mit einer Oxidschicht bedeckte Oberfläche aufweist, umfassend die folgenden Schritte:
- Erfassen von Informationen bezüglich des durchlaufenden länglichen Produkts (3) durch die Steuereinheit (9), wobei die Informationen eine Durchlaufgeschwindigkeit des länglichen Produkts (3) und mindestens eine charakteristische Abmessung des länglichen Produkts (3) in einer zu einer Durchlaufachse (A_{d}) des länglichen Produkts (3) quer verlaufenden Ebene umfassen,
- Bestimmen von Betriebsparametern durch die Steuereinheit (9) in Abhängigkeit von den Informationen bezüglich des durchlaufenden länglichen Produkts (3), die der Beizanordnung (7) aufzuerlegen sind, um das Beizen der Oxidschicht an der Oberfläche des länglichen Produkts (3) zu erzielen und um eine Metallschicht vorbestimmter Dicke an der Oberfläche des länglichen Produkts (3) abzutragen, so dass an der Oberfläche des länglichen Produkts (3) periodische Rauheitsmuster erhalten werden, wobei die Breite der periodischen Muster zwischen 5 µm und 1 mm liegt, durch Vergleich mit in der Steuereinheit (9) vorab gespeicherten experimentellen Ergebnissen,
- Steuern der Beizanordnung (7) durch die Steuereinheit (9), um der Beizanordnung (7) die Betriebsparameter aufzuerlegen,
- Senden von Laserstrahlen auf die Oberfläche des durchlaufenden länglichen Produkts (3) durch die Beizanordnung (7) mittels der Laser (13) gemäß den von der Steuereinheit (9) bestimmten Betriebsparametern.

13. Längliches metallisches Produkt (3), das bestimmt ist, drahtgezogen zu werden, **dadurch gekennzeichnet, dass** das längliche Produkt (3) an seiner Oberfläche periodische Rauheitsmuster aufweist, wobei die Breite der periodischen Muster zwischen 5 µm und 200 µm liegt.

14. Längliches metallisches Produkt (3) nach Anspruch 13, wobei die periodischen Muster aus periodischen Riefen bestehen, die einen regelmäßigen Wechsel von erhabenen Linien und Rillen umfassen, oder aus Mustern, die einen regelmäßigen Wechsel von Spitzen und Vertiefungen gemäß einer ersten und einer zweiten unterschiedlichen Richtung umfassen.

15. Längliches metallisches Produkt (3) nach Anspruch 14, wobei die mittlere Höhe zwischen den Kämmen und den Rillen oder die mittlere Höhe zwischen den Spitzen und den Vertiefungen zwischen 0,2 µm und 500 µm liegt.

16. Längliches metallisches Produkt (3) nach einem der Ansprüche 13 bis 15, **dadurch gekennzeichnet, dass** das längliche Produkt (3) ein Draht oder ein Band ist.

## Claims

1. A facility (5) for the treatment of a metal long product (3) in movement, in preparation for a wire drawing step, the long product (3) having at least one surface covered with a layer of oxides, said facility comprising:
- a stripping assembly (7) comprising at least one group (11, 11a, 11b) of a plurality of lasers (13) distributed around the moving long product (3), each laser (13) being configured to emit beams onto the surface of the moving long product (3) for stripping the surface, each laser (13) being intended for the treatment of an associated portion of the surface of the long product (3),
- a control unit (9) configured to acquire information relating to the long product (3) in movement, the information comprising a speed of movement of the long product (3) and at least one characteristic dimension of the long product (3) in a plane orthogonal to an axis of movement (A_{d}) of the long product,
**characterized in that** the control unit (9) is configured to:
- determine the operating parameters to be imposed on the stripping assembly (7) for obtaining the stripping of the layer of oxide on the surface of the long product (3) and to ablate a layer of metal of predetermined thickness on the surface of the long product (3), and so as to obtain on the surface of the long product periodic roughness patterns, the width of the periodic patterns being comprised between 5 µm and 1 mm, compared with experimental results pre-recorded in the control unit (9), and
- impose said operating parameters to said stripping assembly (7).

2. The treatment facility (5) according to claim 1, **characterized in that** the lasers (13) of the or each laser group (11, 11a, 11b) are uniformly distributed around the moving long product (3).

3. The treatment facility (5) according to any of claims 1 or 2, wherein the operating parameters include an emission power of the lasers (13) of the or each group (11, 11a, 11b) and/or a laser/material interaction time at each point on the surface of the long product (3).

4. The treatment facility (5) according to any of claims 1 to 3, wherein the stripping assembly (7) comprises a distribution system configured to shape the laser beams or to move the laser beams across the surface of the long product (3) such that the laser beams emitted by the plurality of lasers (13) in the or each group (11, 11a, 11b) cover the entire surface of the long product (3) during the movement thereof.

5. The treatment facility (5) according to claim 4, wherein the distribution system comprises, for each laser (13) of at least one group (11, 11a, 11b), an optical device (15) configured to transform each beam emitted by the associated laser (13) into a band affecting a portion of the surface of the long product (3).

6. The treatment facility (5) according to claim 4 or 5, wherein the distribution system comprises, for each laser (13) in at least one group (11, 11a, 11b), a scanning device configured to move the beams generated by the associated laser (13) across the surface of the long product (3), according to a predetermined scan speed and scan pitch, so that the beams emitted by each laser (13) affect a portion of surface of the long product (3).

7. The treatment facility (5) according to claim 6, wherein the operating parameters comprise the scan speed and the scan pitch of the scanning device.

8. A treatment facility (5) according to any of claims 5 to 7, wherein the portion of surface of the long product (3) is defined by two straight lines, parallel to each other, of the surface of the long product (3).

9. The treatment facility (5) according to any of claims 1 to 8, wherein the stripping assembly (7) comprises a first group (11a) of a plurality of first lasers distributed around the moving long product (3) and a second group (11b) of a plurality of second lasers distributed around the moving long product (3), each second laser being downstream of each first laser of the first group (11a) with respect to the axis of movement (A_{d}).

10. The treatment facility (5) according to claim 9, wherein the first lasers are configured to strip the layer of oxide on the surface of the long product (3) by ablating a layer of metal of predetermined thickness on the surface of the long product (3), and the second lasers are configured to impart the predetermined roughness to the surface of the long product (3).

11. The treatment facility (5) according to any of claims 9 or 10, wherein the first lasers are continuous emission lasers, and the second lasers are continuous emission lasers or lasers configured to emit pulsed beams, in particular nanosecond lasers.

12. A treatment method, by means of a facility (5) according to any of claims 1 to 11, for a moving metal long product (3), in preparation for a wire drawing step, the long product (3) having at least one surface covered with a layer of oxides, comprising the following steps:
- acquisition by the control unit (9) of information relating to the long product (3) in movement, the information comprising a speed of movement of the long product (3) and at least one characteristic dimension of the long product (3) in a plane transverse to an axis of movement (A_{d}) of the long product (3),
- determination by the control unit (9), according to the information relating to the long product (3) in movement, of the operating parameters to be imposed on the stripping assembly (7) for obtaining the stripping of the layer of oxide on the surface of the long product (3) and to ablate a layer of metal of predetermined thickness on the surface of the long product (3), and so as to obtain a on the surface of the long product (3) periodic roughness patterns, the width of the periodic patterns being comprised between 5 µm and 1 mm, by comparison with experimental results pre-recorded in the control unit (9),
- control by the control unit (9) of the stripping assembly (7) to impose said operating parameters on the stripping assembly (7),
- emission by the stripping assembly (7), by means of lasers (13), of laser beams on the surface of the moving long product (3) according to the operating parameters determined by the control unit (9).

13. A metal long product (3) for wire drawing, **characterized in that** the long product (3) having periodic roughness patterns on the surface thereof, the width of the periodic patterns being comprised between 5 µm and 200 µm.

14. A metal long product (3) according to claim 13, wherein the periodic patterns consist of periodic striations, comprising a regular alternation of protruding lines and grooves, or in patterns comprising a regular alternation of peaks and recesses along a first and a second distinct directions.

15. The metal long product (3) according to claim 14, wherein the average height between the ridges and grooves, or the average height between the peaks and recesses, is comprised between 0.2 µm and 500 µm.

16. The long product (3) according to any of claims 13 to 15, **characterized in that** the long product (3) is a wire or a ribbon.
